# EUROPEAN PATENT APPLICATION

(11) **EP 2 439 833 A1**
(43) Date of publication of application: **11.04.2012**
(21) Application number: 10187169.7
(22) Date of filing: 11.10.2010
(51) Int. Cl.: H02K 3/487, H02K 3/51

(54) **Turbo-generator rotor with retaining rings, wedges and method to reduce eddy currents in such a rotor**

(71) Applicant: Alstom Technology Ltd, 5400 Baden (CH)
(72) Inventor: Rajput, Nagib, CH-5430 Wettingen (CH); Haldemann, Johann, CH-5242 Birr (CH); Apostol, Corneliu, CH-5301 Siggenthal Station (CH)

(57) **Abstract**

The rotor (1) of an electric generator has slots (4) housing windings (5) closed by a wedge (6) and retaining rings (7) encircling and supporting the rotor end windings (10). Moreover it comprises an electric connection between each retaining ring end (20) facing the other retaining ring (7) and the wedges (6).

## Description

### TECHNICAL FIELD

The present invention relates to a rotor of an electric generator, a retaining ring, a wedge and a method for reducing the losses in an electric generator.

### BACKGROUND OF THE INVENTION

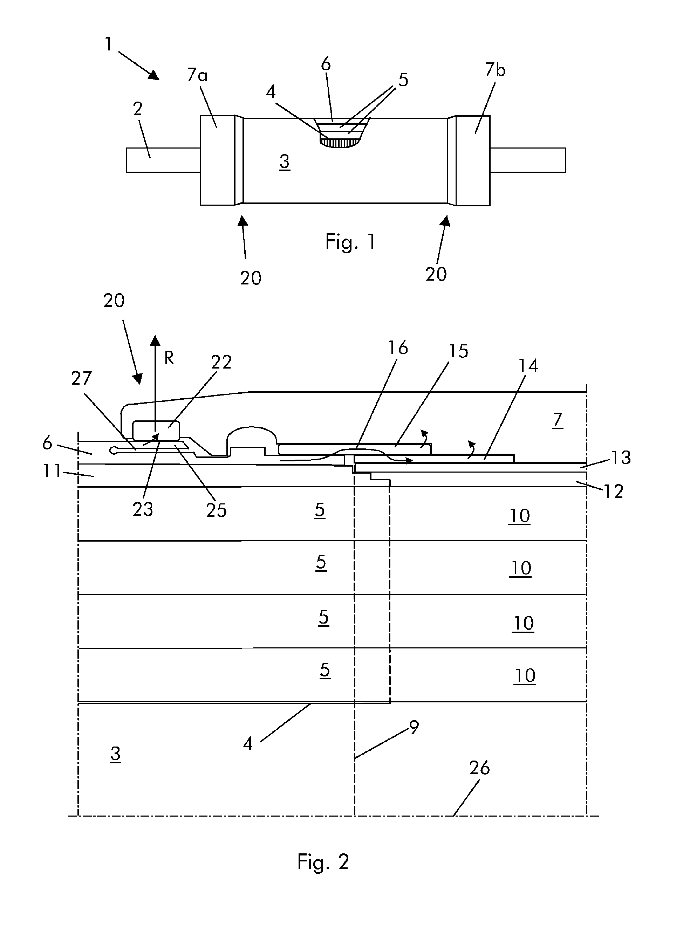

Figure 1 schematically shows a rotor 1 of an electric generator.

It comprises a rotor shaft 2 supporting a rotor core 3 provided with slots 4 housing rotor windings 5.

The slots 4 are closed by wedges 6, that prevent the windings 5 from slipping away from them during operation.

In addition, at the two opposite ends of the rotor core 3 retaining rings 7a, 7b are provided, to enclose and support those parts of the winding 5 outside of the slots 4 (end windings).

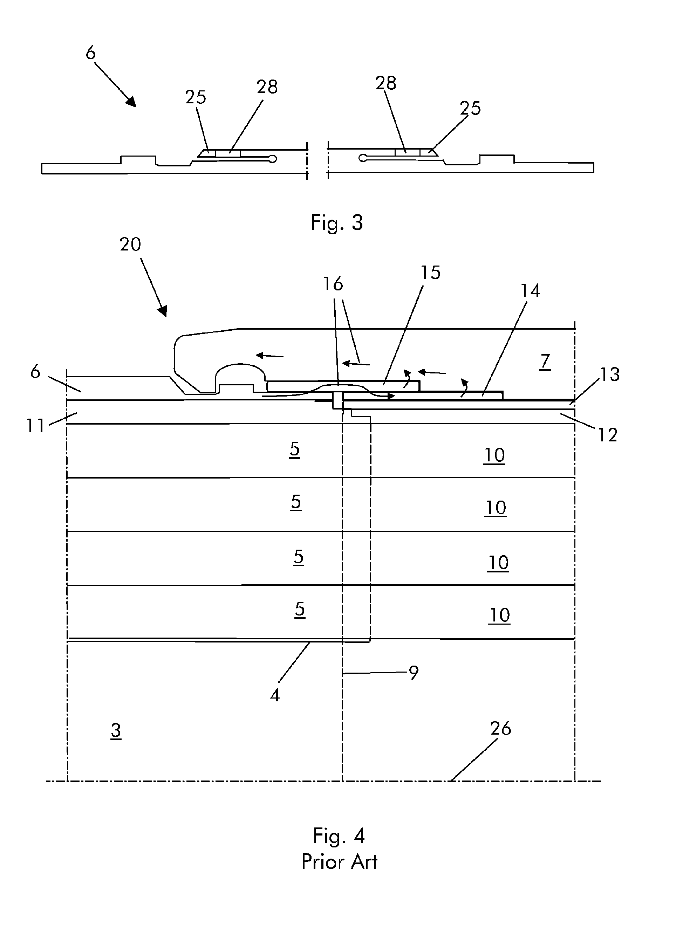

Figure 4 schematically shows a longitudinal cross section of an end of the rotor core 3, in correspondence of a retaining ring 7.

In particular figure 4 shows a part of the rotor core 3, delimited by the dashed line 9, with the slots 4 (with their insulation extending outside of the slots) and the windings 5 housed therein, in addition, the end windings 10 extending outside of the slots 4 and around the rotor shaft 2 are also shown.

Within each slot 4 and above the windings 5 one or usually more than one insulating layers 11 and, above them, the wedge 6, are provided.

Correspondingly, above the end windings 10 one or usually more than one insulating layers 12 (with a stepped end facing the stepped end of the insulating layers 11) and one or more than one liner sheets 13 protecting the insulating layers 12 are provided.

Moreover, in order to short circuit all the wedges 6 together, a conductive damper ring 14 and a plurality of damper fingers or damper finger segments 15 are provided (the damper fingers are typically connected to conductive segments that extend outside of the slots; for sake of simplicity in the following damper fingers and segments are globally defined as damper finger segments). The damper fingers segments 15 make direct contact with the wedges 6.

During operation eddy currents 16 are generated within the wedges 6, they pass into the damper finger segments 15 and then enter the damper ring 14 (where they circulate tangentially).

In addition, from the damper finger segments 15 a part of the eddy currents 16 enters the retaining ring 7 and starts to tangentially circulate therein as well.

In particular, since these eddy currents 16 mainly concentrate within an end 20 (the so called nose) of the retaining ring 7, a great part of the eddy currents 16 entering the retaining ring 7 flows back towards this end 20, generating electric losses.

### SUMMARY OF THE INVENTION

The technical aim of the present invention therefore includes providing a rotor, a retaining ring, a wedge and a method addressing the aforementioned problems of the known art.

Within the scope of this technical aim, an aspect of the invention is to provide a rotor, a retaining ring, a wedge and a method allowing operation with reduced losses caused by eddy currents.

The technical aim, together with these and further aspects, are attained according to the invention by providing a rotor, a retaining ring, a wedge and a method in accordance with the accompanying claims.

### BRIEF DESCRIPTION OF THE DRAWINGS

Further characteristics and advantages of the invention will be more apparent from the description of a preferred but non-exclusive embodiment of the rotor, retaining ring, wedge and method illustrated by way of nonlimiting example in the accompanying drawings, in which:
Figure 1 is a schematic view of a rotor of an electric generator;
Figure 2 is a schematic cross section of a part of a rotor in an embodiment of the invention;
Figures figure 3 shows a wedge in an embodiment of the invention;
Figure 4 shows a schematic cross section of a part of a rotor according to the prior art.

### DETAILED DESCRIPTION OF EMBODIMENTS OF THE INVENTION

In the following the same reference are used to designate like or corresponding parts as those already previously described.

The electric generator comprises a rotor 1 with slots 4 (with their insulations extending outside of the slots) housing windings 5; reference 10 indicates the end windings extending outside of the slots 4.

The slots 4 are closed by the wedges 6.

In addition, retaining rings 7, encircling the rotor ends 20 to enclose and support the end windings 10, are provided.

Advantageously, an electric connection between the end 20 of each retaining ring 7 facing the other retaining ring 7 and the wedges 6 is provided.

In other words, with particular reference to figure 1 wherein the retaining rings are identified by 7a and 7b, the electric connection is provided between the end 20 of the retaining ring 7a facing the retaining ring 7b and the wedges 6 and likewise between the end 20 of the retaining ring 7b facing the retaining ring 7a and the wedges 6.

In order to define this electric connection, each of the retaining ring end 20 facing the other retaining ring 7 has a conductive element 22 embedded therein, with a part 23 opening to the central hole of the same retaining ring 7 (for example the part 23 can protrude within the central hole of the retaining ring 7, but this is not necessary) to make contact with the wedges 6.

The conductive element 22 comprises a conductive ring preferably made out of copper.

In order to improve the electric connection, the wedges 6 have elastic portions 25 (at each of their ends) pressing against the conductive elements 22.

In a possible embodiment (shown in the figures) the elastic portions 25 are arranged to radially expand (i.e. along a radial direction R).

The elastic portions 25 extend parallel to an electric generator longitudinal axis 26 and are defined by longitudinal cut outs 27 extending parallel to the electric generator longitudinal axis 26.

In a further possible embodiment, the elastic portions 25 can also include one or more weights 28 embedded therein; during operation these weights 28 help expansion of the elastic portions 25 under centrifugal load to improve electric connection.

The operation of the electric generator is apparent from that described and illustrated and is substantially the following.

During operation eddy currents are generated within the wedges 6.

Thanks to the electric connection achieved via the element 22, a part of these eddy currents directly flows from the wedges 6 to the end 20 of the retaining rings 7; another part of the eddy currents still reaches the damper finger segments 15 to then pass into the damper ring 14 and retaining ring 7 and back to the end 20.

The current path via the damper finger segments 15 to the damper ring 14 and the retaining ring 7 is kept because eddy currents at lower frequencies (typically 50/60 Hz and 100/120 Hz) can reach high amplitudes and therefore it is advantageous to keep two parallel paths from wedges 6 to retaining ring 7.

The higher the frequencies, the more eddy currents will flow via the direct connection 22 to the retaining ring 7 generating less losses than if the eddy currents have to flow via the damper finger segments 15 to the retaining ring 7 and back to the end 20.

The present disclosure also refers to a method for reducing the losses in an electric generator.

The method comprises directly conveying at least part of the eddy currents from the wedges 6 where they are generated into the retaining ring 7, at retaining ring ends 20 facing the other retaining ring 7.

Naturally the features described may be independently provided from one another.

In practice the materials used and the dimensions can be chosen at will according to requirements and to the state of the art.

### REFERENCE NUMBERS

- 1: rotor
- 2: rotor shaft
- 3: rotor core
- 4: slots
- 5: rotor windings
- 6: wedges
- 7,: 7a, 7b retaining rings
- 9: limit of the rotor core
- 10: end windings
- 11: insulating layers
- 12: insulating layers
- 13: liner sheet
- 14: damper ring
- 15: damper finger segments
- 16: eddy currents
- 20: ends of 7
- 22: conductive element
- 23: part of 22
- 25: elastic portions of 6
- 26: electric generator longitudinal axis
- 27: longitudinal cuts
- 28: weight
- R: radial direction

## Claims

1. Rotor (1) of an electric generator having slots (4) housing windings (5) closed by a wedge (6), and retaining rings (7) encircling the rotor ends (20), **characterised by** comprising an electric connection between each retaining ring end (20) facing the other retaining ring (7) and the wedges (6).

2. Rotor (1) according to claim 1, **characterised in that** the electric connection is defined by a conductive element (22) embedded in each of the retaining ring end (20) facing the other retaining ring (7) and making contact with the wedges (6).

3. Rotor (1) according to claim 2, **characterised in that** the conductive element (22) comprises a conductive ring.

4. Rotor (1) according to claim 2, **characterised in that** the wedges (6) have elastic portions (25) pressing against the conductive elements (22).

5. Rotor (1) according to claim 4, **characterised in that** the elastic portions (25) are arranged to radially expand.

6. Rotor (1) according to claim 5, **characterised in that** the elastic portions (25) extend parallel to an electric generator longitudinal axis (26) and are defined by longitudinal cut outs (27) extending parallel to an electric generator longitudinal axis (26).

7. Rotor (1) according to claim 5, **characterised in that** the elastic portions (25) include at least a weight (28) embedded therein.

8. Retaining ring (7) of a rotor of an electric generator **characterised by** comprising a conductive element (22) embedded therein and having a part (23) opening to its central hole.

9. Retaining ring (7) according to claim 8, **characterised in that** the conductive element (22) comprises a conductive ring.

10. Wedge (6) for an electric generator rotor slot (4), **characterised by** having at least an elastic portion (25) arranged to expand.

11. Wedge (6) according to claim 10, **characterised in that** when the wedge (6) is inserted into a rotor slot (4) the elastic portion (25) can radially expand.

12. Wedge (6) according to claim 11, **characterised in that** the elastic portions (25) extend parallel to an electric generator longitudinal axis (26) when the wedge (6) is inserted into a rotor slot (4).

13. Wedge (6) according to claim 10, **characterised in that** the elastic portions (25) are defined by cut outs (27) extending parallel to the electric generator longitudinal axis (26) when the wedge (6) is inserted into a rotor slot (4).

14. Wedge (6) according to claim 10, **characterised in that** the elastic portions (25) include at least a weight (28) embedded therein.

15. Method for reducing the losses in an electric generator comprising a rotor (1) with slots (4) housing windings (5) closed by wedges (6) and retaining rings (7) encircling the rotor ends, **characterised by** directly convey at least part of the eddy currents from the wedges (6) where they are generated into the retaining rings (7) at retaining ring ends (20) facing the other retaining ring (7).
